(19) Europäisches Patentamt
European Patent Office
Office européen des brevets

(11) **EP 2 582 133 A1**

(12) **EUROPEAN PATENT APPLICATION**
published in accordance with Art. 153(4) EPC

(43) Date of publication:
**17.04.2013  Bulletin 2013/16**

(51) Int Cl.:
***H04N 7/173*** (2011.01)      ***A61B 19/00*** (2006.01)
***H04N 7/26*** (2006.01)

(21) Application number: **12800505.5**

(22) Date of filing: **06.06.2012**

(86) International application number:
**PCT/JP2012/064535**

(87) International publication number:
**WO 2012/173020 (20.12.2012 Gazette 2012/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **13.06.2011  JP 2011131672**

(71) Applicant: **Sony Corporation Tokyo 108-0075 (JP)**

(72) Inventor: **RANATUNGA Vijitha Sanjeewa Tokyo 108-0075 (JP)**

(74) Representative: **Berryman, Robert Jan et al D Young & Co LLP 120 Holborn London EC1N 2DY (GB)**

(54) **TRANSMITTER, TRANSMISSION METHOD, AND PROGRAM**

(57)    The present technique relates to a sending device, a sending method, and a program that can restrain a disturbance or the like of an image, the disturbance or the like being generated when the image, transmitted from a data transmission channel, is displayed with low delay. An RTP communication part obtains an adjustment quantity for adjusting a capture timing to start capturing an image, a capture adjusting part adjusts the capture timing based on the adjustment quantity, a capture part captures the image in synchronization with the adjusted capture timing, and the RTP communication part sends the captured image to a receiving device. The present technique may be applied to, for example, a sending device that captures and sends an image.

FIG. 1

**Description**

TECHNICAL FIELD

The present disclosure relates to a sending device, a sending method, and a program. More particularly, the present disclosure relates to a sending device, a sending method, and a program that can restrain a disturbance or the like of an image, the disturbance or the like being generated when the image, transmitted from a sending device through a data transmission channel such as a network, for example, is displayed with low delay.

BACKGROUND ART

In recent years, remote surgeries have been performed where, for example, a surgery is performed on a patient in a remote location by operating robot arms. During such a remote surgery, a doctor performing the surgery operates robot arms while looking at moving images obtained by taking images from the ongoing surgery; thus it is desirable that the moving images be transmitted with low delay of several frames (or several fields) or less (substantially in real time).
Given such a situation, encoding techniques have been proposed to take several lines of each picture constituting a moving image as a unit of block data and to encode (compress) each unit of block data by wavelet transform (see Patent Document 1, for example).
According to this type of encoding technique, a sending device starts encoding the block data without waiting for the input of the complete units of the block data within a picture and sends the resultant encoded data. A receiving device starts decoding (expanding) the encoded data before receiving the complete encoded data from the sending device.
The receiving device thus can decode the encoded data and make the picture displayable in time for a predetermined display timing when a picture should be displayed. Hence, the receiving device can allow a monitor to display the picture in synchronization with the display timing.

CITATION LIST

PATENT DOCUMENT

Patent Document 1: Japanese Patent Application Laid-Open No. 2007-311924

SUMMARY OF THE INVENTION

PROBLEMS TO BE SOLVED BY THE INVENTION

Congestion of a data transmission channel such as a network, however, may prevent the sending device from sending a moving image with low delay of several frames or less.
In this case, the receiving device cannot make a picture displayable in time for the predetermined display timing. The picture that has not been made displayable in time for the display timing may not be, for example, displayed on the monitor and be skipped, possibly causing a disturbance or the like to an image to be displayed on the monitor.
The present disclosure has been provided in light of such a situation, and is to restrain a disturbance or the like of an image, the disturbance or the like being generated when the image, transmitted from a data transmission channel, is displayed with low delay.

SOLUTIONS TO PROBLEMS

A sending device according to an aspect of the present disclosure includes an obtaining part that obtains an adjustment quantity for adjusting a capture timing to start capturing an image; a capture adjusting part that adjusts the capture timing based on the adjustment quantity; a capture part that captures the image in synchronization with the adjusted capture timing; and a sending part that sends the captured image to a receiving device.
The receiving device includes a holding part that temporarily holds the image, writes into the holding part the image received from the sending part, and allows the image written in the holding part to be displayed in synchronization with a predetermined display timing, and the obtaining part may obtain the adjustment quantity calculated based on a result of comparison between an allowable delay time representing a delay time allowed when the writing of the image into the holding part is not completed within a predetermined needed time from a write start time when the writing has started, and a necessary time at least taken from the write start time for the image that has been written with a delay time of the allowable delay time or less to the display timing.

A first calculating part that calculates the allowable delay time, a second calculating part that calculates the necessary time, a comparing part that compares the allowable delay time and the necessary time, and an adjustment quantity calculating part that calculates the adjustment quantity based on a comparison result of the comparing part may be further included, and the obtaining part may obtain the adjustment quantity calculated by the adjustment quantity calculating part.

If a comparison result is obtained to show that the necessary time is longer than the allowable delay time, the adjustment quantity calculating part may calculate the adjustment quantity for adjusting the capture timing such that the necessary time is reduced to an extent that a condition that the necessary time is longer than the allowable delay time is met.

If a comparison result is obtained to show that the necessary time is not longer than the allowable delay time, the adjustment quantity calculating part may calculate the adjustment quantity for adjusting the capture timing such that the necessary time becomes longer than the allowable delay time.

The obtaining part may obtain the adjustment quantity by receiving the same from the receiving device.

A first measuring part that measures a write time taken to write the image into the holding part of the receiving device may be further included, and the first calculating part may calculate the allowable delay time based on a distribution of the write time.

A second measuring part that measures a write preparation time taken to start writing the image into the holding part of the receiving device may be further included, and the second calculating part may calculate the necessary time based on a distribution of the write preparation time.

A sending method according to an aspect of the present disclosure is for a sending device that captures and sends an image, the sending method including the steps of, by the sending device: obtaining an adjustment quantity for adjusting a capture timing to start capturing the image; adjusting the capture timing based on the adjustment quantity; capturing the image in synchronization with the adjusted capture timing; and sending the captured image to a receiving device.

A program according to an aspect of the present disclosure is for allowing a computer to function as: an obtaining part that obtains an adjustment quantity for adjusting a capture timing to start capturing an image; a capture adjusting part that adjusts the capture timing based on the adjustment quantity; a capture part that captures the image in synchronization with the adjusted capture timing; and a sending control part that allows the captured image to be sent to a receiving device.

According to an aspect of the present disclosure, an adjustment quantity for adjusting a capture timing to start capturing an image is obtained, the capture timing is adjusted based on the adjustment quantity, the image is captured in synchronization with the adjusted capture timing, and the captured image is sent to a receiving device.

EFFECTS OF THE INVENTION

According to the present disclosure, a disturbance or the like of an image can be restrained, the disturbance or the like being generated when the image, transmitted from a data transmission channel, is displayed with low delay.

BRIEF DESCRIPTION OF DRAWINGS

Fig. 1 is a block diagram of an exemplary configuration of a sending/receiving system according to the present disclosure.
Fig. 2 is a graph of an example of displaying of an image in synchronization with a display timing.
Fig. 3 is a graph of an exemplary method of measuring write information.
Fig. 4 is a graph of an exemplary distribution of a write preparation time.
Fig. 5 is a graph of an exemplary distribution of a buffer write time.
Fig. 6 is a graph of an exemplary method of calculating a necessary time and an allowable delay time.
Figs. 7A and 7B are first graphs of an exemplary case where a write start time to start writing an image changes depending on a capture timing.
Figs. 8A and 8B are first graphs of an example of adjusting a capture timing.
Figs. 9A and 9B are first graphs of an exemplary case where the write start time to start writing the image has changed due to the adjusted capture timing.
Figs. 10A and 10B are second graphs of an exemplary case where the write start time to start writing the image changes depending on the capture timing.
Figs. 11A and 11B are second graphs of an example of adjusting the capture timing.
Figs. 12A and 12B are second graphs of an exemplary case where the write start time to start writing the image has changed due to the adjusted capture timing.

Fig. 13 is a first graph of an example of varying of a transmitting time.

Fig. 14 is a second graph of an example of varying of the transmitting time.

Fig. 15 is a flow chart for describing a sending process performed by the sending device.

Fig. 16 is a flow chart for describing a capture adjusting process in step S6 in Fig. 15.

Fig. 17 is a flow chart for describing an adjustment quantity calculating process performed by the receiving device.

Fig. 18 is a graph of an exemplary method of measuring write information of an odd-numbered field image.

Fig. 19 is a graph of an exemplary method of measuring the write information of a progressive image.

Fig. 20 is a block diagram of an exemplary configuration of a computer.

MODE FOR CARRYING OUT THE INVENTION

An embodiment of the present disclosure (hereinafter referred to as the present embodiment) will now be described below. Note that the description will be in the following order.

1. The present embodiment (an example of restraining of a disturbance or like of an image by adjusting a capture timing Vblank)
2. Exemplary variations

<1. The present embodiment>

[Exemplary configuration of sending/receiving system]

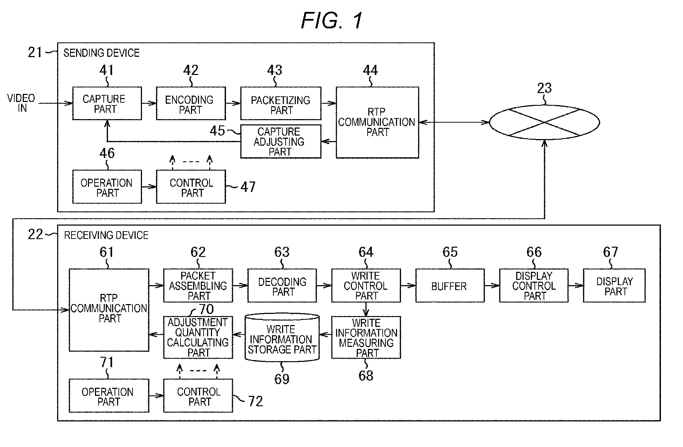

Fig. 1 illustrates a sending/receiving system according to the present disclosure.

This sending/receiving system includes a sending device 21, a receiving device 22, and a network 23 such as the Internet.

In this sending/receiving system, the sending device 21, for example, adjusts a capture timing Vblank to start capturing (obtaining) an image and sends the image captured at the adjusted capture timing to the receiving device 22.

This allows the receiving device 22 to display the image received from the sending device 21 with low delay without a disturbance or the like.

[Exemplary configuration of sending device 21]

The sending device 21 includes a capture part 41, an encoding part 42, a packetizing part 43, an RTP (real-time transport protocol) communication part 44, a capture adjusting part 45, an operation part 46, and a control part 47.

The capture part 41, in synchronization with the capture timing Vblank adjusted by the capture adjusting part 45, obtains (captures) image data externally input (corresponding to Video IN) and supplies the image data to the encoding part 42. As the image data, a frame image including multiple lines, for example, may be used. As another example, a field image including either odd-numbered lines or even-numbered lines among multiple lines may be used.

The present embodiment will be described with reference to Figs. 1 to 18 with an assumption that a field image is used as the image data. In this case, the capture part 41, in synchronization with the capture timing Vblank adjusted by the capture adjusting part 45, obtains an odd-numbered field image and an even-numbered field image alternately as the image data and supplies the image data to the encoding part 42.

Here, the odd-numbered field image refers to a field image consisting of odd-numbered lines among the multiple lines. The even-numbered field image refers to a field image consisting of even-numbered lines among the multiple lines.

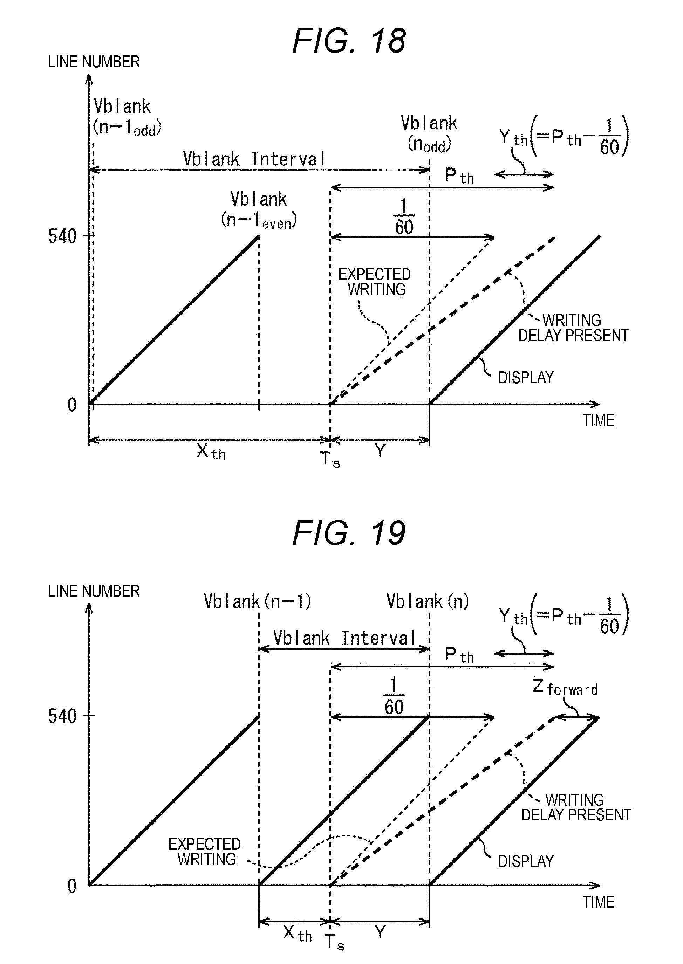

Note that the use of a frame image as the image data will be described with reference to Fig. 19.

The encoding part 42 performs an encoding process to encode the image data from the capture part 41 and supplies the encoded data obtained through the encoding process to the packetizing part 43.

As the encoding process, a wavelet encoding process to encode image data, for example, by using wavelet transform to compress the image data may be used.

The packetizing part 43 packetizes (converts) the encoded data from the encoding part 42 into multiple RTP packets and outputs the RTP packets to the RTP communication part 44. An RTP packet refers to a packet in accordance with RTP described in IETF RFC3550.

The RTP communication part 44, in accordance with RTP, adds to the RTP packets from the packetizing part 43 the time or the like for sending the RTP packets, for example, to the receiving device 22 as a timestamp. The RTP communication part 44 then sends the RTP packets, with the timestamp added, through the network 23 to the receiving device 22.

In addition, the RTP communication part 44, in accordance with RTP, receives an RTCP message supplied through the network 23 from the receiving device 22 and supplies the message to the capture adjusting part 45.

Here, the RTCP message includes adjustment quantities Zforward and Zbackward for adjusting the capture timing Vblank. The adjustment quantities Zforward and Zbackward are, for example, calculated and sent by the receiving device 22. One of the adjustment quantities Zforward and Zbackward is set to, for example, zero.

The capture adjusting part 45 performs a capture adjusting process to adjust the capture timing Vblank of the capture part 41 based on the adjustment quantities Zforward and Zbackward from the RTP communication part 44.

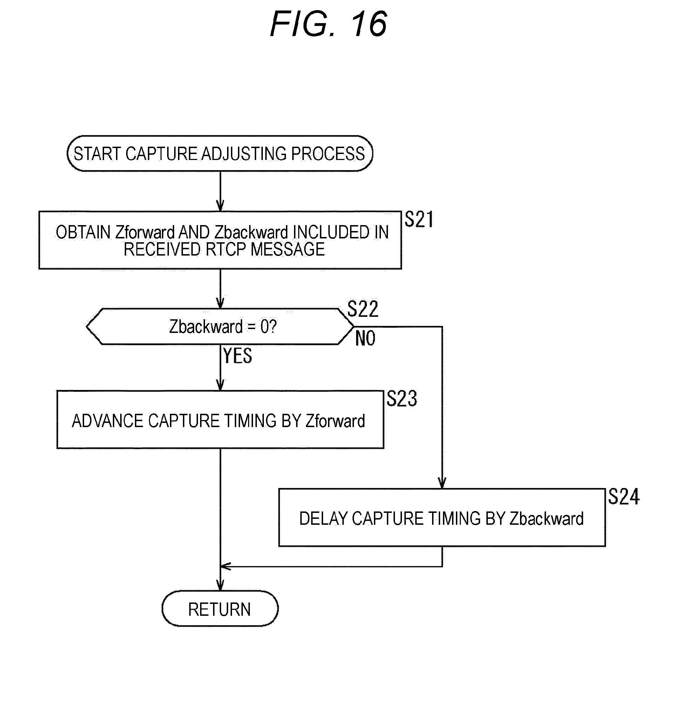

In other words, for example, if the adjustment quantity Zforward = 0, the capture adjusting part 45 makes an adjustment such that the capture timing Vblank is advanced by the adjustment quantity Zbackward. If, for example, the adjustment quantity Zbackward = 0, the capture adjusting part 45 makes an adjustment such that the capture timing Vblank is delayed by the adjustment quantity Zforward. The capture adjusting process performed by the capture adjusting part 45 will be described in detail below with reference to Fig. 16.

The operation part 46 includes operating buttons and the like to be operated by a user and supplies an operating signal according to the user operation to the control part 47.

The control part 47 controls the capture part 41, the encoding part 42, the packetizing part 43, and the RTP communication part 44 based on, for example, an operating signal from the operation part 46.

[Exemplary configuration of receiving device 22]

The receiving device 22 includes an RTP communication part 61, a packet assembling part 62, a decoding part 63, a write control part 64, a buffer 65, a display control part 66, a display part 67, a write information measuring part 68, a write information storage part 69, an adjustment quantity calculating part 70, an operation part 71, and a control part 72.

The RTP communication part 61 receives the RTP packets sent from the RTP communication part 44 through the network 23 and supplies them to the packet assembling part 62. The RTP communication part 61 generates, based on adjustment quantities from the adjustment quantity calculating part 70, an RTCP message including the adjustment quantities, and sends the message through the network 23 to the RTP communication part 44.

The packet assembling part 62 assembles the RTP packets from the RTP communication part 61 to generate encoded data to be decoded and supplies the data to the decoding part 63.

The decoding part 63 performs a decoding process for the encoded data from the packet assembling part 62 and supplies the resultant image data to the write control part 64. The decoding process corresponds to the encoding process performed by the encoding part 42. As the decoding process, a decoding process of decoding and expanding by using inverse transform of wavelet transform, for example, is used.

The write control part 64 supplies the image data from the decoding part 63 to the buffer 65 for storing (writing). In addition, the write control part 64 supplies a write start time Ts when writing into the buffer 65 has started and a write end time Te when the writing has ended to the write information measuring part 68 for each unit of image data.

The buffer 65 temporarily stores the image data from the write control part 64.

The display control part 66 reads the image data from the buffer 65 and supplies the data to the display part 67. The display control part 66 then allows the display part 67 to display the image data read from the buffer 65 in synchronization with a predetermined display timing Vblank.

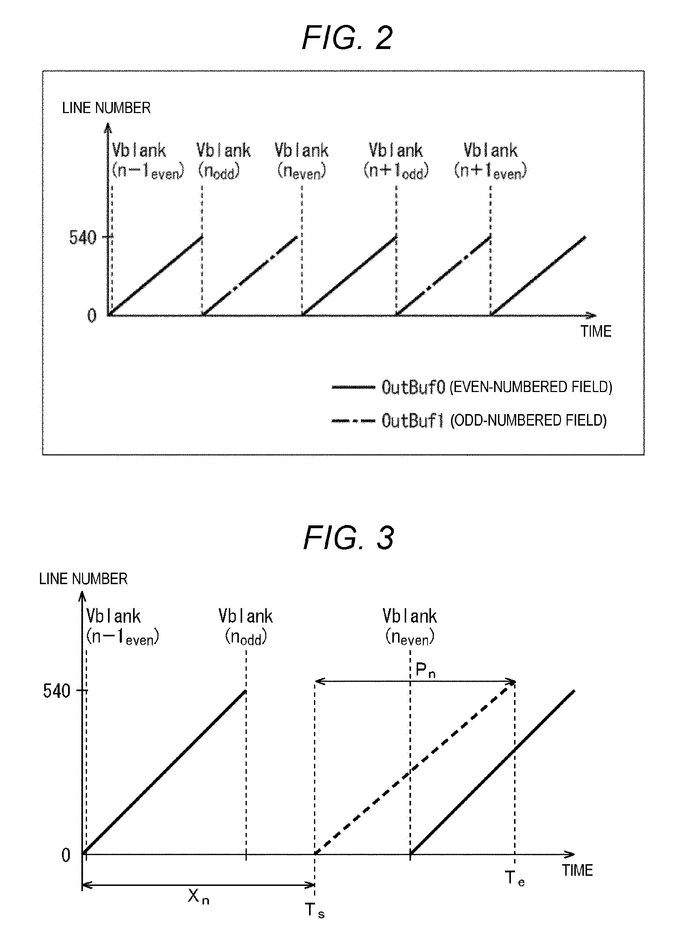

Fig. 2 illustrates an example where the display control part 66 allows each unit of image data to be displayed at the predetermined display timing Vblank.

The image data is, for example, a field image, which is one of an odd-numbered field image $n_{odd}$ consisting of odd-numbered lines among the multiple lines or an even-numbered field image $n_{even}$ consisting of even-numbered lines among the multiple lines.

In Fig. 2, the horizontal axis represents time; the vertical axis represents a line number for a line displayed at a corresponding time. An assumption here is that the odd-numbered field image $n_{odd}$ and the even-numbered field image $n_{even}$ each consist of 540 lines.

A display timing Vblank ($n_{odd}$) represents a time to start displaying the odd-numbered field image $n_{odd}$. A display timing Vblank ($n_{even}$) represents a time to start displaying the even-numbered field image $n_{even}$.

The display control part 66 reads the odd-numbered field image $n_{odd}$ from the buffer 65 and allows the display part 67 to display the image in synchronization with the predetermined display timing Vblank ($n_{odd}$). The display control part 66 also reads the even-numbered field image $n_{even}$ from the buffer 65 and allows the display part 67 to display the image in synchronization with the predetermined display timing Vblank (uneven).

The display part 67 displays each unit of image data with, for example, an interlacing scheme. In other words, for example, the display part 67 displays the odd-numbered field image $n_{odd}$ and the even-numbered field image $n_{even}$ alternately as a unit of image data under the control of the display control part 66. The display part 67 may be a component of the receiving device 22 as shown in Fig. 1, or may be separate from the receiving device 22 and provided independently. In this case, the display control part 66 within the receiving device 22 is connected to the display part 67 provided outside the receiving device 22 through, for example, a cable or the like.

The write information measuring part 68 measures write information of the even-numbered field image $n_{even}$ written in the buffer 65. The write information measuring part 68 may measure write information of the odd-numbered field image $n_{odd}$ written in the buffer 65 in lieu of, or together with, the write information of the even-numbered field image $n_{even}$. This will be described below with reference to Fig. 18.

If, for example, the frame image is used as the image data and the display part 67 is designed to display each unit of image data through a progressive scheme, the write information measuring part 68 will take the frame image as each unit of image data and measure write information of the frame image. This will be described below with reference to Fig. 19.

The description below assumes that the write information measuring part 68 measures write information of the even-numbered field image $n_{even}$ written in the buffer 65.

The write information measuring part 68 measures, as the write information of the even-numbered field image $n_{even}$ written in the buffer 65, a write preparation time Xn that is a time necessary until the writing of the even-numbered field image $n_{even}$ starts and a buffer write time Pn that is a time taken for the writing of the even-numbered field image $n_{even}$, for example.

Fig. 3 illustrates an example where the write information measuring part 68 measures the write preparation time Xn and the buffer write time Pn for the even-numbered field image $n_{even}$.

Here, in Fig. 3, the write start time Ts represents the time when the writing of the even-numbered field image $n_{even}$ into the buffer 65 has started. The write end time Te represents the time when the writing of the even-numbered field image $n_{even}$ into the buffer 65 has ended.

Note that the write information measuring part 68 is supplied by the write control part 64 with the write start time Ts and the write end time Te for the even-numbered field image $n_{even}$.

As shown in Fig. 3, the write information measuring part 68 measures the write preparation time Xn (= Vblank $(n - 1_{even})$ - Ts) based on the write start time Ts from the write control part 64 and a predetermined display timing Vblank $(n-I_{even})$.

In addition, for example, the write information measuring part 68 measures, as shown in Fig. 3, the buffer write time Pn (= Te - Ts) based on the write start time Ts and the write end time Te from the write control part 64.

The write information measuring part 68 supplies the write preparation time Xn and the buffer write time Pn measured for each even-numbered field image $n_{even}$ to the write information storage part 69 for storage.

With reference to Fig. 1 again, the write information storage part 69 stores the write preparation time Xn and the buffer write time Pn from the write information measuring part 68 as the write information.

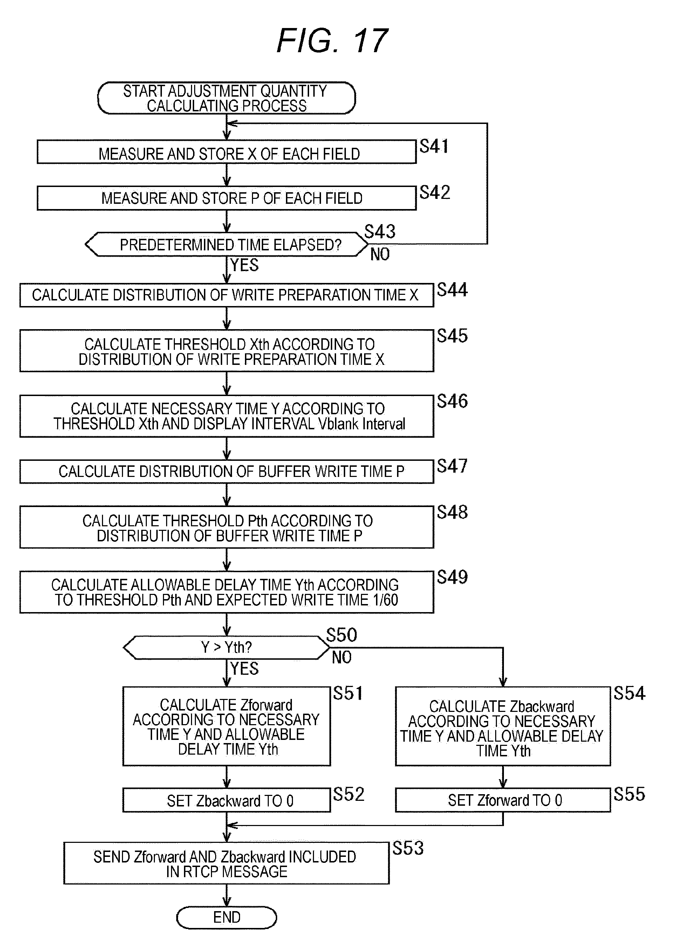

The adjustment quantity calculating part 70 performs, based on the write information stored in the write information storage part 69, an adjustment quantity calculating process to calculate the adjustment quantities Zforward and Zbackward for adjusting the capture timing Vblank at the capture part 41 of the sending device 21. Note that the adjustment quantity calculating process will be described in detail with reference, for example, to Fig. 17.

The adjustment quantity calculating part 70 supplies adjustment quantities Zforward and Zbackward calculated through the adjustment quantity calculating process to the RTP communication part 61.

The operation part 71 includes operating buttons and the like to be operated by a user and supplies an operating signal according to the user operation to the control part 72.

The control part 72 controls the RTP communication part 61, the packet assembling part 62, the decoding part 63, the write control part 64, the display control part 66, the write information measuring part 68, and the adjustment quantity calculating part 70 based on, for example, an operating signal from the operation part 71.

[Details of adjustment quantity calculating process and capture adjusting process]

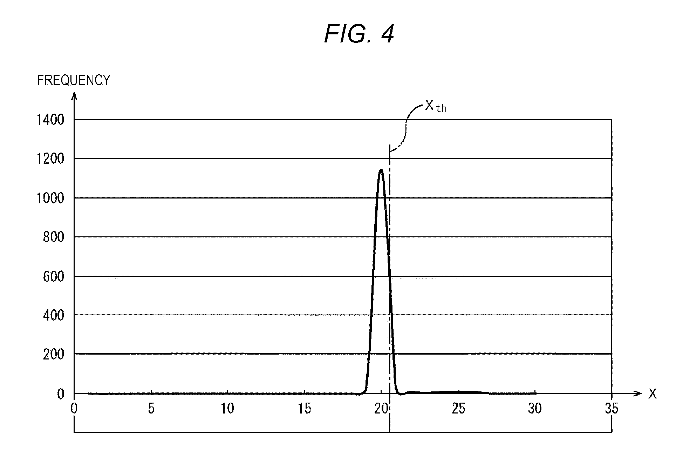

Now, with reference to Figs. 4 to 12, the adjustment quantity calculating process performed by the adjustment quantity calculating part 70 of the receiving device 22 and the capture adjusting process performed by the capture adjusting part 45 of the sending device 21 will be described.

Fig. 4 illustrates an exemplary distribution of the write preparation time Xn stored in the write information storage part 69.

In Fig. 4, the horizontal axis represents the write preparation time Xn; the vertical axis represents the frequency of the write preparation time Xn.

The adjustment quantity calculating part 70 generates, based on the write preparation time Xn stored in the write information storage part 69, X distribution information representing a distribution of the write preparation time Xn as shown in Fig. 4.

The adjustment quantity calculating part 70 then calculates, based on the X distribution information of the write preparation time Xn, a threshold Xth for distinguishing the write preparation time Xn occupying an upper $\alpha$ (where $\alpha$ = 95, for example) percent from the write preparation time Xn occupying the remaining lower (100 - $\alpha$) percent, with the

write preparation time Xn sorted in an ascending order.

Here, the threshold Xth is the maximum value or more of the write preparation time Xn occupying the upper $\alpha$ (where $\alpha$ = 95, for example) percent and is less than the minimum value of the write preparation time Xn occupying the lower (100 - $\alpha$) percent, with the write preparation time Xn sorted in an ascending order. The value $\alpha$ is, for example, predetermined by user operation.

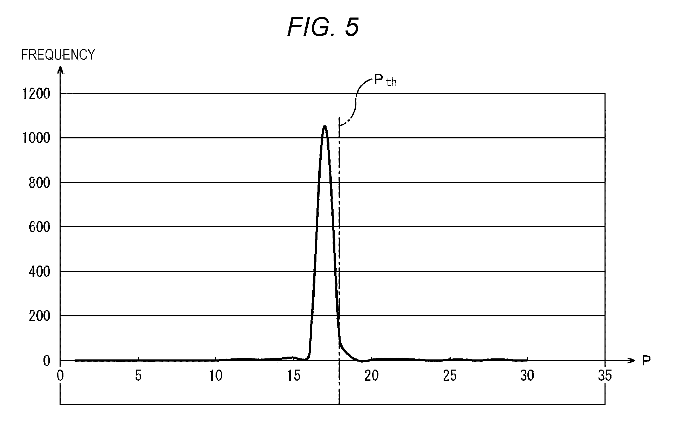

Fig. 5 illustrates an exemplary distribution of the buffer write time Pn stored in the write information storage part 69.

In Fig. 5, the horizontal axis represents the buffer write time Pn; the vertical axis represents the frequency of the buffer write time Pn.

The adjustment quantity calculating part 70 generates, based on the multiple buffer write times Pn stored in the write information storage part 69, P distribution information representing a distribution of the buffer write time Pn as shown in Fig. 5.

The adjustment quantity calculating part 70 then calculates, based on the P distribution information of the buffer write time Pn, a threshold Pth for distinguishing the buffer write time Pn occupying an upper $\alpha$ percent from the buffer write time Pn occupying the lower (100 - $\alpha$) percent, with the buffer write time Pn sorted in an ascending order.

Here, the threshold Pth is the maximum value or more of the buffer write time Pn occupying the upper $\alpha$ and is less than the minimum value of the buffer write time Pn occupying the lower (100 - $\alpha$) percent, with the buffer write time Pn sorted in the ascending order.

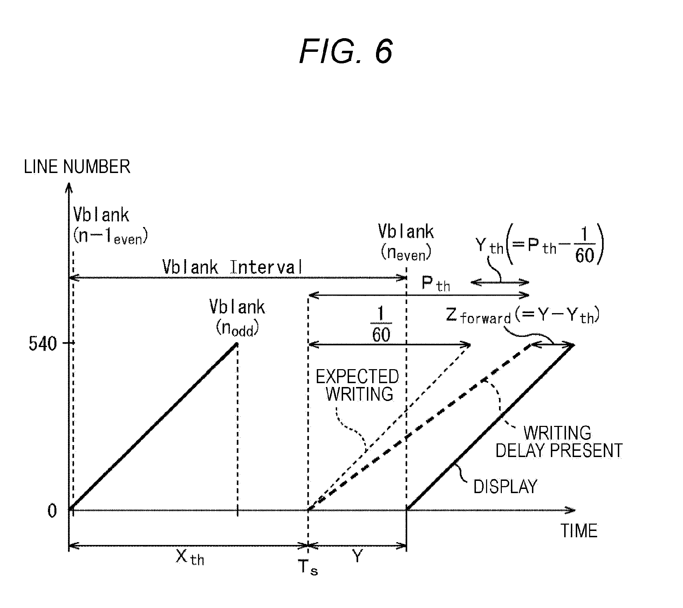

Fig. 6 illustrates an example where the adjustment quantity calculating part 70 calculates an allowable delay time Yth based on the threshold Pth, and a necessary time Y based on the threshold Xth.

The adjustment quantity calculating part 70 calculates, based on the threshold Pth calculated from the P distribution information of the buffer write time Pn as shown in Fig. 6, the allowable delay time Yth with expression (1).

$$Yth = Pth - (1/60) \qquad\qquad (1)$$

Here, the allowable delay time Yth refers to a delay time used when a writing of the even-numbered field image $n_{even}$ cannot be completed within a predetermined expected write time 1/60 from the write start time Ts when the writing has started. The allowable delay time Yth is a delay time allowed to display the even-numbered field image $n_{even}$ without a disturbance or the like with a probability of at least $\alpha$ percent.

$\alpha$ Note that the expected write time 1/60 refers to a write time of the even-numbered field image $n_{even}$ (or the odd-numbered field image $n_{odd}$) expected when there is no delay or the like in data writing at the write control part 64.

The expected write time 1/60 is determined depending on, for example, the time taken to display the even-numbered field image $n_{even}$ (or the odd-numbered field image $n_{odd}$). In the current case, the display part 67 is configured to display the odd-numbered field image and the even-numbered field image each for a display time 1/60. Hence, for example, the expected write time is determined similarly to be 1/60. When the display part 67 displays the odd-numbered field image and the even-numbered field image each for a display time 1/m, the expected write time is, for example, 1/m.

The adjustment quantity calculating part 70, for example, calculates, based on the threshold Xth calculated from the X distribution information of the write preparation time Xn, a necessary time Y for the even-numbered field image $n_{even}$ to be received with a probability of $\alpha$ percent, or in other words, the even-numbered field image $n_{even}$ to be written with a delay time of the allowable delay time Yth or less.

Here, the necessary time Y refers to a time at least taken from the write start time Ts to the display timing ($n_{even}$) for the even-numbered field image $n_{even}$ to be written into the buffer 65 with a delay time of the allowable delay time Yth or less.

In other words, for example, the adjustment quantity calculating part 70 calculates, based on a display interval Vblank Interval between the display timing Vblank (n-1$_{even}$) and the display timing ($n_{even}$), and the threshold Xth as shown in Fig. 6, the necessary time Y with expression (2) below.

$$Y = Vblank\ Interval - Xth \qquad\qquad (2)$$

The adjustment quantity calculating part 70 determines whether the even-numbered field image $n_{even}$ can be displayed without a disturbance or the like with a probability of at least $\alpha$ percent based on whether the calculated necessary time Y meets expression (3) below.

$$Y > Yth \qquad\qquad\qquad (3)$$

The adjustment quantity calculating part 70 then, based on the result of the determination, calculates the adjustment quantities Zforward and Zbackward. In other words, for example, the adjustment quantity calculating part 70 calculates the adjustment quantity Zforward (= Y - Yth) as shown in Fig. 6, if expression (3) is met. The adjustment quantity calculating part 70 then supplies the calculated adjustment quantity Zforward and the adjustment quantity Zbackward set to 0 to the RTP communication part 61.

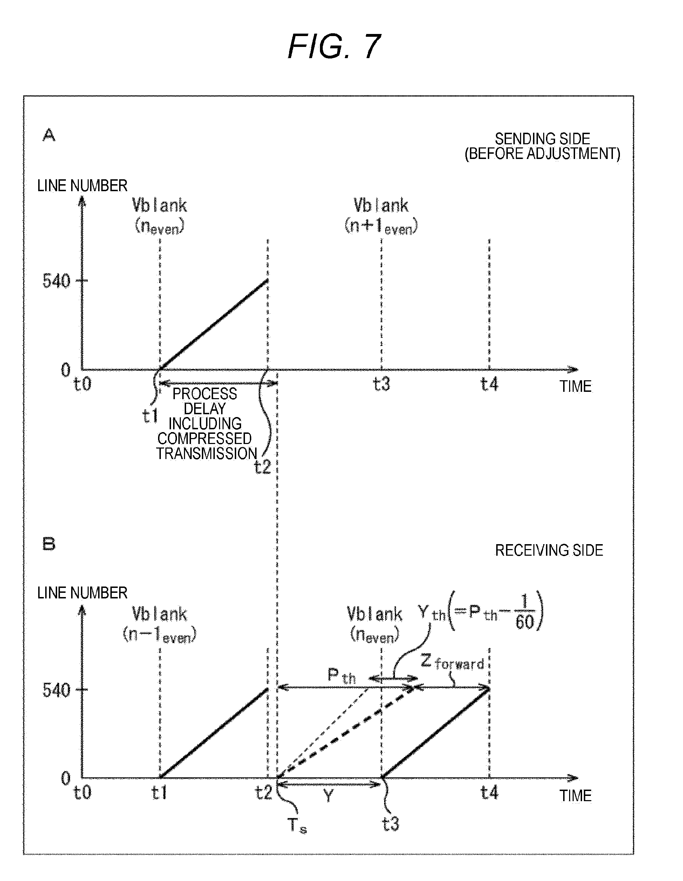

Now, with reference to Figs. 7 to 9, the adjustment quantity calculating process and the capture adjusting process, both of which are performed if expression (3) is met, will be described. The adjustment quantity calculating process is performed by the adjustment quantity calculating part 70 and the capture adjusting process is performed by the capture adjusting part 45.

Note that the following description assumes that the display timing at the receiving device 22 side is in synchronization with the capture timing at the sending device 21 side; however, the display timing may not be in synchronization with the capture timing.

As shown in Fig. 7A, the sending device 21 side starts capturing the even-numbered field image $n_{even}$ in synchronization with a capture timing Vblank ($n_{even}$).

If expression (3) is met, as shown in Fig. 7B, the receiving device 22 side starts writing the even-numbered field image $n_{even}$ into the buffer 65 at the write start time Ts. A line (i) with the line number i then will be written into the buffer 65 before the display timing of the line (i).

In this case, the adjustment quantity calculating part 70 calculates the adjustment quantity Zforward (= Y - Yth) as shown in Fig. 7B and sets the adjustment quantity Zbackward to zero, and supplies the adjustment quantities Zforward and Zbackward to the RTP communication part 61. The RTP communication part 61 generates an RTCP message including the adjustment quantities Zforward and Zbackward from the adjustment quantity calculating part 70, and sends the message through the network 23 to the RTP communication part 44 of the sending device 21.

The RTP communication part 44 of the sending device 21 supplies the RTCP message received through the network 23 from the RTP communication part 61 to the capture adjusting part 45.

The capture adjusting part 45 adjusts the capture timing Vblank of the capture part 41 based on the adjustment quantities Zforward and Zbackward included in the RTCP message from the RTP communication part 44.

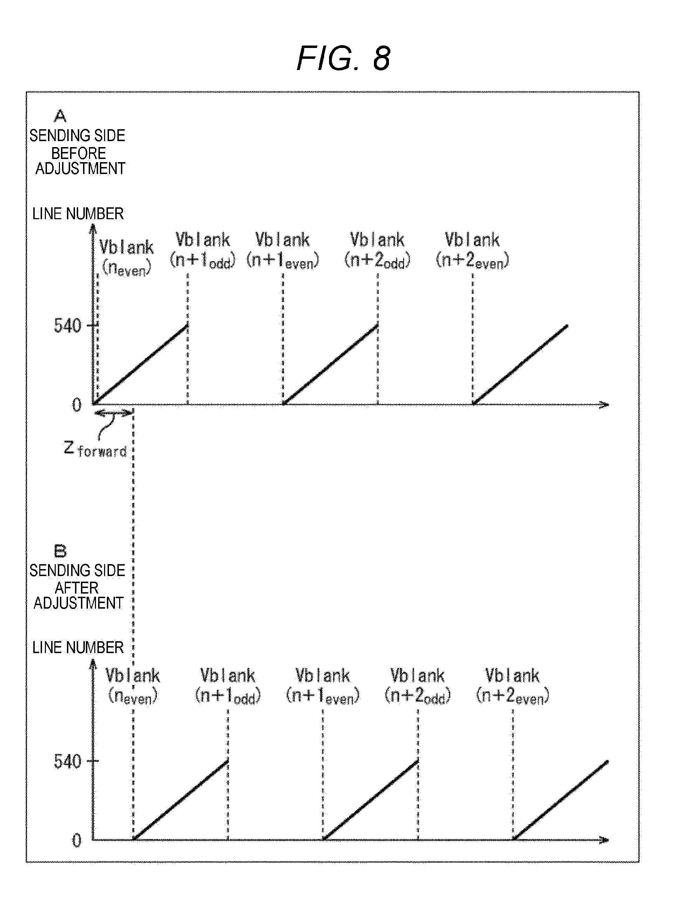

In the current case, the adjustment quantity Zbackward included in the RTCP message is zero. Accordingly, the capture adjusting part 45 adjusts the current capture timing Vblank as shown in Fig. 8A so as to obtain the capture timing Vblank as shown in Fig. 8B by delaying the current capture timing Vblank by the adjustment quantity Zforward.

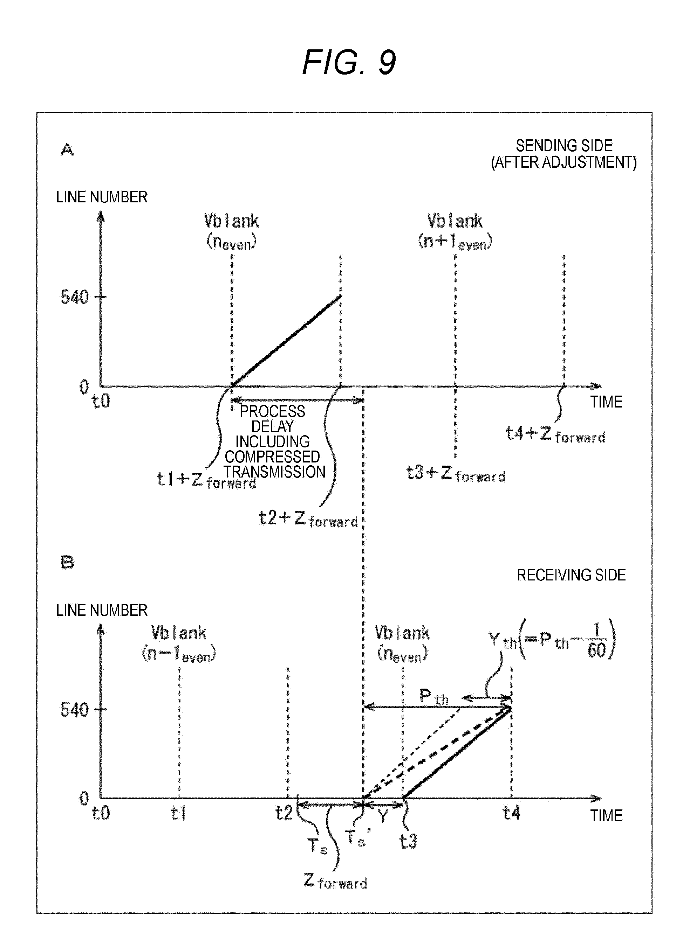

Hence, the capture part 41 will capture an external even-numbered field image $n_{even}$ with the adjusted capture timing Vblank that is delayed by the adjustment quantity Zforward as shown in Fig. 9A, for example.

The write control part 64 of the receiving device 22 thus will start writing the even-numbered field image $n_{even}$ at the write start time Ts' (= Ts + Zforward) that is delayed by the adjustment quantity Zforward as shown in Fig. 9B. In this case, the necessary time Y is reduced limitlessly to an extent that expression (3) is met.

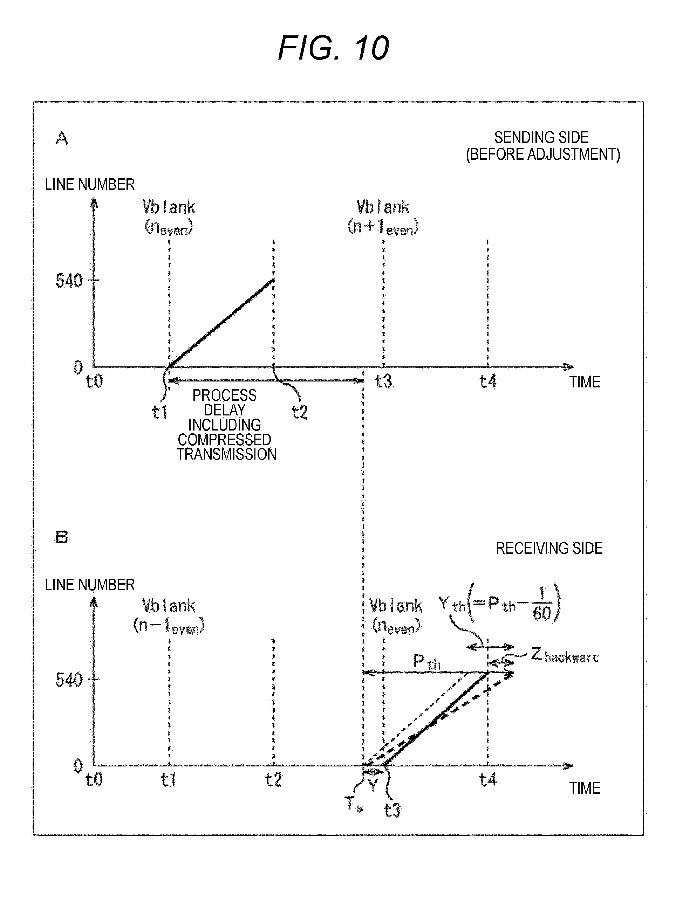

Now, with reference to Figs. 10 to 12, the adjustment quantity calculating process and the capture adjusting process, both of which are performed if expression (3) is not met, will be described. The adjustment quantity calculating process is performed by the adjustment quantity calculating part 70 and the capture adjusting process is performed by the capture adjusting part 45.

Note that, as shown in Fig. 10A, the sending device 21 side starts capturing the even-numbered field image $n_{even}$ in synchronization with the capture timing Vblank ($n_{even}$).

If expression (3) is not met, the receiving device 22 side starts writing the even-numbered field image $n_{even}$ into the buffer 65 at the write start time Ts as shown in Fig. 10B. Given a line (i) with the line number i, a line with the line number L or beyond (i ≥ L), for example, will be written into the buffer 65 after the display timing of the line (i ≥ L).

Here, the line with the line number L refers to, in Fig. 10B, a line when the thick broken line representing the write timing of each line of the even-numbered field image $n_{even}$ and the solid line representing the display timing of each line of the even-numbered field image $n_{even}$ cross.

In this case, the adjustment quantity calculating part 70 calculates, as shown in Fig. 10B, the adjustment quantity Zbackward (= Yth - Y) and sets the adjustment quantity Zforward to zero, and supplies the adjustment quantities Zforward and Zbackward to the RTP communication part 61. The RTP communication part 61 generates an RTCP message including the adjustment quantities Zforward and Zbackward from the adjustment quantity calculating part 70, and sends the message through the network 23 to the RTP communication part 44 of the sending device 21.

The RTP communication part 44 of the sending device 21 supplies the RTCP message, received through network 23 from the RTP communication part 61, to the capture adjusting part 45.

The capture adjusting part 45 adjusts the capture timing Vblank of the capture part 41 based on the adjustment quantities Zforward and Zbackward included in the RTCP message from the RTP communication part 44.

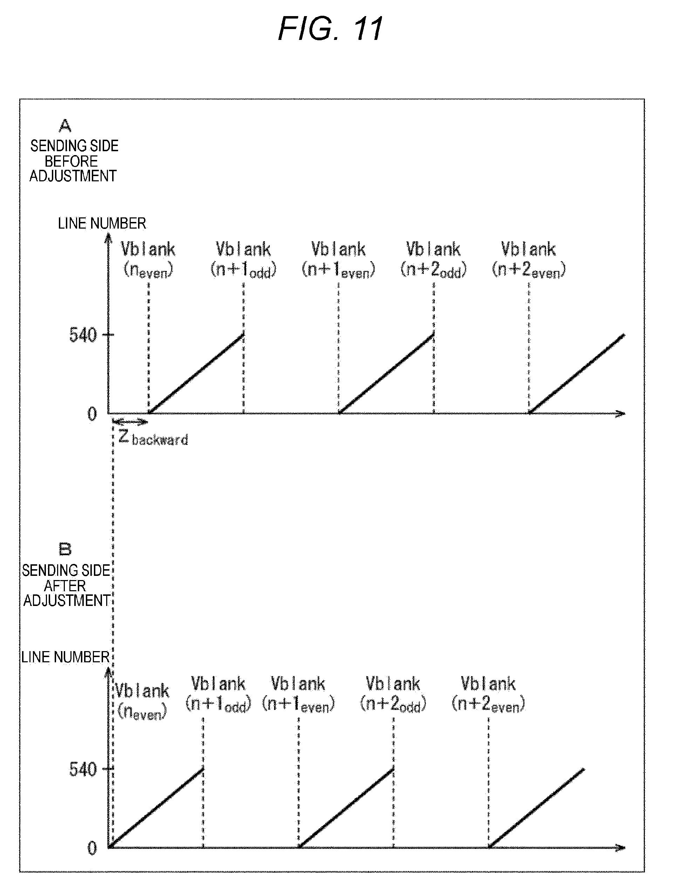

In the current case, the adjustment quantity Zforward included in the RTCP message is zero. Accordingly, the capture adjusting part 45 adjusts the current capture timing Vblank as shown in Fig. 11A so as to obtain the capture timing Vblank as shown in Fig. 11B by advancing the current capture timing Vblank by the adjustment quantity Zbackward.

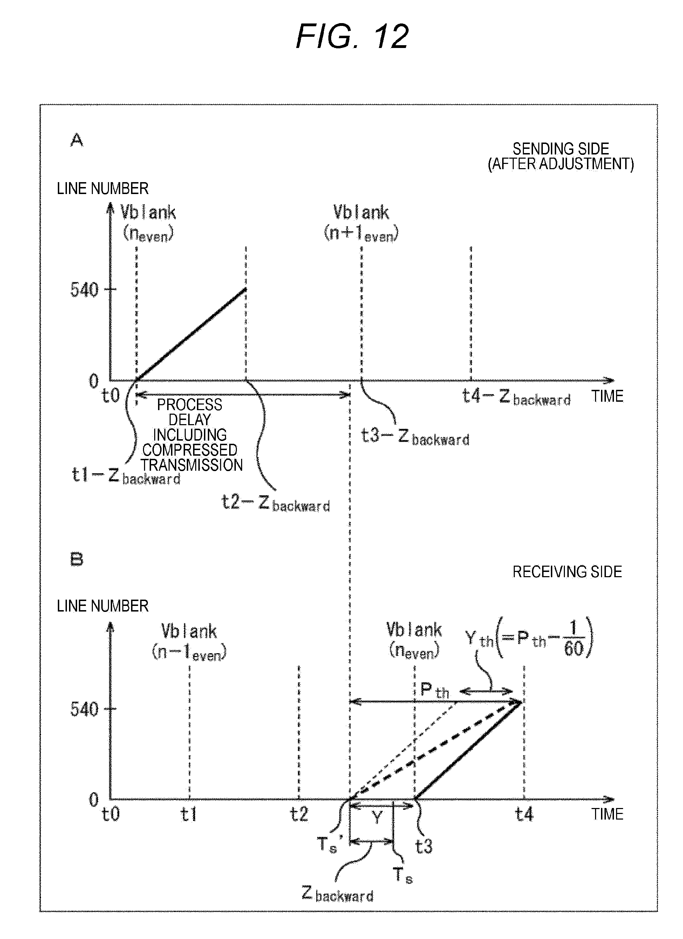

The capture part 41 thus, for example, will capture an external even-numbered field image $n_{even}$ at the adjusted capture timing Vblank that is advanced by the adjustment quantity Zforward as shown in Fig. 12A.

The write control part 64 of the receiving device 22 thus will start writing the even-numbered field image $n_{even}$ at the write start time Ts' (Ts - Zbackward) that is advanced from the write start time Ts by the adjustment quantity Zbackward as shown in Fig. 12B. In this case, as shown in Fig. 12B, expression (3) will be met.

Note that the adjustment quantity calculating part 70 performs the adjustment quantity calculating process as appropriate. This is because the transmitting time of the image data varies depending on congestion and other situations of the network 23, which brings about a state as shown in Figs. 7A and 7B or in Figs. 10A and 10B even with the adjusted capture timing Vblank.

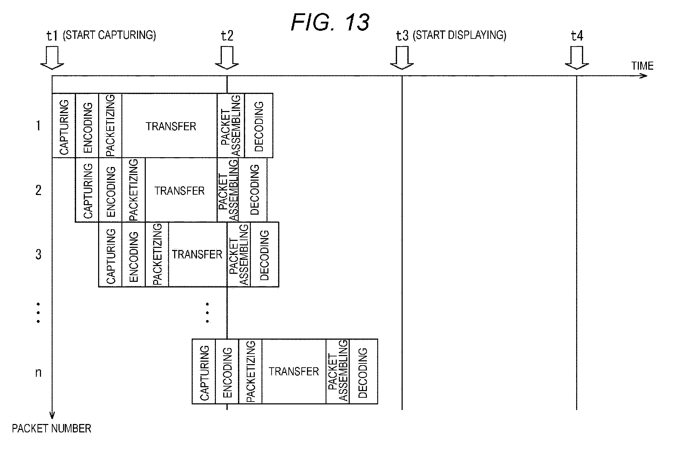

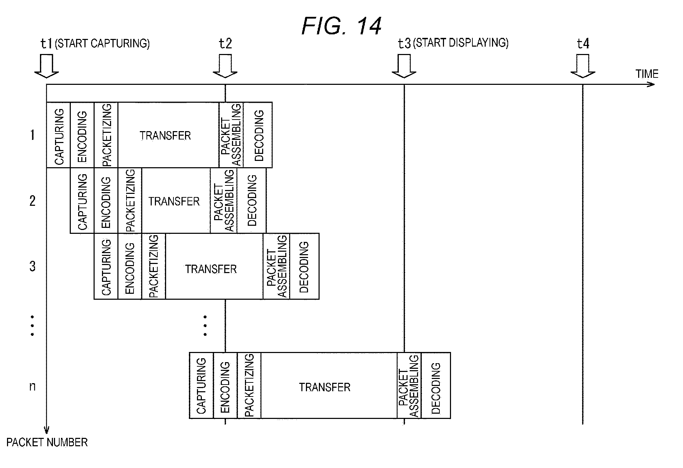

Now, Figs. 13 and 14 each illustrate an example where the transmitting time varies depending on congestion and other situations of the network 23.

In Figs. 13 and 14, the vertical axis represents a packet number that stands for an RTP packet of the image data. The horizontal axis represents the time that is each taken for a "capture" process performed by the capture part 41, an "encoding" process performed by the encoding part 42, a "packetizing" process performed by the packetizing part 43, an RTP packet "transfer" process performed through the network 23 between the RTP communication part 44 and the RTP communication part 61, a "packet assembling" process performed by the packet assembling part 62, and a "decoding" process performed by the decoding part 63. These processes are performed for the data constituting the image data.

As shown in Figs. 13 and 14, the time taken for the "transfer" process will significantly vary depending on the situation of the network 23. That is, if congestion of the network 23 is relatively minor, the time taken for the "transfer" process will be short as shown in Fig. 13. If the congestion of the network 23 is relatively major, the time taken for the "transfer" process will be long as shown in Fig. 14.

The time taken for the "transfer" process and consequently the transmitting time vary depending on the congestion and other situations of the network 23, which in turn brings about a state as shown in Figs. 7A and 7B or Figs. 10A and 10B. Hence, the adjustment quantity calculating part 70 needs to perform the adjustment quantity calculating process as appropriate.

The capture adjusting part 45 then needs to adjust the capture timing Vblank of the capture part 41 based on the adjustment quantities Zforward and Zbackward supplied from the adjustment quantity calculating part 70 through the RTP communication part 61, the network 23, and the RTP communication part 44.

[Description of operation of sending device 21]

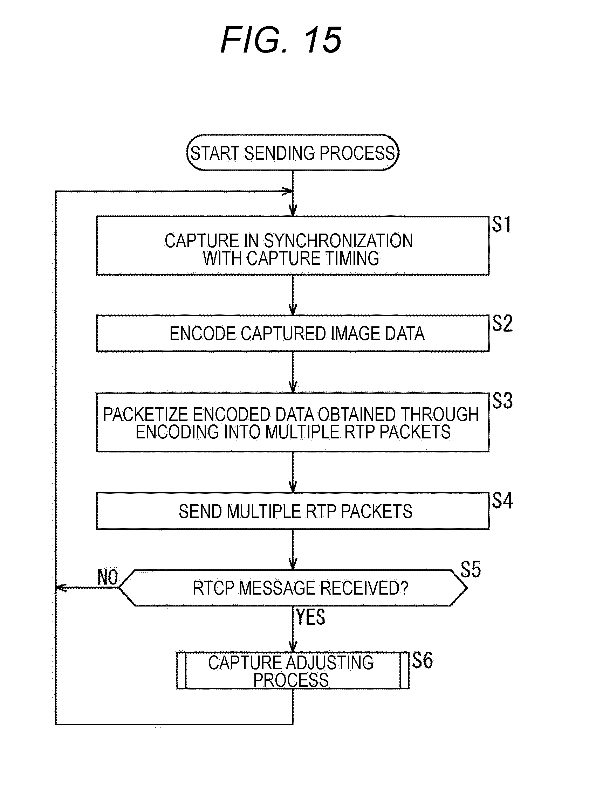

Now, with reference to a flow chart in Fig. 15, a sending process performed by the sending device 21 will be described.

This sending process starts, for example, when the operation part 46 is operated so as to capture and send image data. The control part 47 then performs the sending process by controlling the capture part 41 through the capture adjusting part 45 according to an operating signal from the operation part 46.

In other words, at step S1, the capture part 41 obtains image data input externally and supplies the data to the encoding part 42 under the control of the control part 47 and in synchronization with the capture timing Vblank adjusted by the capture adjusting process of step S6 to be described below.

Here, if the capture adjusting process of step S6 is not performed yet, the capture part 41, in synchronization with the predetermined capture timing Vblank, for example, obtains image data input externally and supplies the data to the encoding part 42.

In step S2, the encoding part 42 performs the encoding process to encode the image data from the capture part 41 and supplies the encoded data obtained through the encoding process to the packetizing part 43.

In step S3, the packetizing part 43 packetizes (converts) the encoded data from the encoding part 42 into multiple RTP packets and outputs the packets to the RTP communication part 44.

In step S4, the RTP communication part 44, in accordance with RTP, adds to the RTP packets from the packetizing part 43 the time or the like for sending the RTP packets, for example, to the receiving device 22 as a timestamp. The RTP communication part 44 then sends the RTP packets, with the timestamp added, through the network 23 to the receiving device 22.

In step S5, the RTP communication part 44 determines whether the RTCP message including the adjustment quantities Zforward and Zbackward has been received through the network 23 from the receiving device 22. If it is determined that the message has not been received, the process reverts to step S1 and, from then on, the process is performed in a similar manner.

If the RTP communication part 44 determines in step S5 that the RTCP message including the adjustment quantities Zforward and Zbackward has been received through the network 23 from the receiving device 22, the RTCP message is supplied to the capture adjusting part 45.

In step S6, the capture adjusting part 45 performs the capture adjusting process to adjust the capture timing Vblank based on the RTCP message from the RTP communication part 44. Also in step S6, the capture adjusting part 45, after the completion of the capture adjusting process, reverts to step S1 of the process, and from then on, the process is performed in a similar manner. Note that the sending process is finished when, for example, the operation part 46 is operated by a user so as to stop sending image data.

Now, with reference to the flow chart of Fig. 16, the capture adjusting process in step S6 of Fig. 15 will be described.

As described above, the capture adjusting part 45 is supplied with the RTCP message by the RTP communication part 44.

In step S21, the capture adjusting part 45 obtains (extracts), from the RTCP message supplied by the RTP communication part 44, the adjustment quantities Zforward and Zbackward that are included in the RTCP message.

In step S22, the capture adjusting part 45 determines whether the obtained adjustment quantity Zbackward is zero. If the adjustment quantity Zbackward is determined to be zero, the process moves on to step S23.

In step S23, the capture adjusting part 45 controls the capture part 41 so as to delay the capture timing Vblank of the capture part 41 by the obtained other adjustment quantity Zforward.

In other words, for example, the capture adjusting part 45 adjusts the current capture timing Vblank as shown in Fig. 8A so as to obtain the capture timing Vblank as shown in Fig. 8B.

The capture part 41 thus captures each unit of the image data in synchronization with the adjusted capture timing Vblank as shown in Fig. 9A. The display control part 66 of the receiving device 22 hence displays the image data, as shown in Fig. 9B, at the display timing Vblank with the necessary time Y that is reduced as much as possible to the extent that expression (3) is met.

In step S22, the capture adjusting part 45 determines whether the obtained adjustment quantity Zbackward is zero. If the adjustment quantity Zbackward is determined to be not zero, or in other words, if the adjustment quantity Zforward is determined to be zero, the process moves on to step S24.

In step S24, the capture adjusting part 45 controls the capture part 41 so as to advance the capture timing Vblank of the capture part 41 by the obtained other adjustment quantity Zbackward.

In other words, for example, the capture adjusting part 45 adjusts the current capture timing Vblank as shown in Fig. 11A so as to obtain the capture timing Vblank as shown in Fig. 11B. The capture part 41 thus captures each unit of the image data in synchronization with the adjusted capture timing Vblank as shown in Fig. 12A. The display control part 66 of the receiving device 22 hence displays the image data, as shown in Fig. 12B, at the display timing Vblank that meets expression (3).

The capture adjusting process is thus completed and returned to step S6 in Fig. 15. The process reverts to step S1. In step S1, the capture part 41 captures each unit of the image data in synchronization with the capture timing Vblank adjusted through the capture adjusting process.

As described above, according to the capture adjusting process, if expression (3) is not met, the capture adjusting part 45 adjusts the capture timing Vblank in step S24 so as to meet expression (3).

The receiving device 22, therefore, can restrain a situation where a disturbance or the like is generated in the image because a part of the image is skipped.

In addition, for example, even if expression (3) is met, the capture adjusting part 45 adjusts the capture timing Vblank in step S23 so as to reduce the necessary time Y as much as possible to the extent that expression (3) is met.

Thus, the overall time taken from the write start time to the display timing is reduced for the odd-numbered field image $n_{odd}$ and the even-numbered field image $n_{even}$, enabling the image to be displayed with minimized low delay.

[Description of operation of receiving device 22]

Now, with reference to the flow chart of Fig. 17, the adjustment quantity calculating process performed by the receiving device 22 will be described.

The adjustment quantity calculating process starts, for example, when the RTP packets are sent through the network 23 from the sending device 21. The RTP communication part 61 receives the RTP packets sent through the network 23 from the RTP communication part 44 and supplies the packets to the packet assembling part 62. The packet assembling part 62 assembles the RTP packets from the RTP communication part 61 to generate the encoded data to be decoded and supplies the data to the decoding part 63. The decoding part 63 performs the decoding process for the encoded data from the packet assembling part 62 and supplies the resultant image data to the write control part 64. The decoding process corresponds to the encoding process performed by the encoding part 42.

The write control part 64 supplies the image data (the odd-numbered field image and the even-numbered field image) from the decoding part 63 to the buffer 65 for storing (writing). In addition, the write control part 64 supplies the write start time Ts when the writing into the buffer 65 has started and the write end time Te when the writing has ended to the write information measuring part 68 for each even-numbered field image $n_{even}$.

The display control part 66 reads the odd-numbered field image and the even-numbered field image as the image data from the buffer 65 and allows the display part 67 to display the image data in synchronization with the predetermined display timing Vblank.

In step S41, based on the write start time Ts from the write control part 64 and the predetermined display timing Vblank, the write information measuring part 68 measures the write preparation time Xn for the even-numbered field image $n_{even}$ and supplies the write preparation time Xn to the write information storage part 69 for storage.

In step S42, based on the disclosure time Ts and the end time Te from the write control part 64, the write information measuring part 68 measures the buffer write time Pn for the even-numbered field image $n_{even}$ and supplies the buffer write time Pn to the write information storage part 69 for storage.

In step S43, the adjustment quantity calculating part 70 determines whether a time measured by a built-in timer part (not shown) has passed a predetermined time. If the time measured is determined to have not passed the predetermined time, the process reverts to step S41 and, from then on, the process is performed in a similar manner.

If the adjustment quantity calculating part 70 determines in step S43 that the time measured has passed the predetermined time, the process moves on to step S44.

In step S44, the adjustment quantity calculating part 70 reads the write preparation time Xn from the write information storage part 69 and calculates the X distribution information representing the distribution of the write preparation time Xn that has been read.

In step S45, the adjustment quantity calculating part 70 calculates the threshold Xth based on the X distribution information calculated in step S44.

In step S46, the adjustment quantity calculating part 70 calculates the necessary time Y based on the display interval Vblank Interval and the threshold Xth, using expression (2).

In step S47, the adjustment quantity calculating part 70 reads the buffer write time Pn from the write information storage part 69 and calculates the P distribution information representing the distribution of the buffer write time Pn that has been read.

In step S48, the adjustment quantity calculating part 70 calculates the threshold Pth according to the P distribution information calculated in step S47.

In step S49, the adjustment quantity calculating part 70 calculates the allowable delay time Yth based on the threshold Pth calculated in step S48 and the expected write time 1/60, using expression (1).

In step S50, the adjustment quantity calculating part 70 determines whether expression (3) is met based on the necessary time Y calculated in step S46 and the allowable delay time Yth calculated in step S49. If expression (3) is determined to be met, the process moves on to step S51.

In step S51, the adjustment quantity calculating part 70 calculates the adjustment quantity Zforward (= Y - Yth) based on the necessary time Y and the allowable delay time Yth as shown in Fig. 7B. The adjustment quantity Zforward will be an adjustment quantity for adjusting the capture timing Vblank such that the necessary time Y is reduced to the extent that expression (3) is met.

In step S52, the adjustment quantity calculating part 70 sets the adjustment quantity Zbackward to zero and supplies the adjustment quantities Zforward and Zbackward to the RTP communication part 61. The process moves on to step S53.

Then, in step S53, the RTP communication part 61 generates the RTCP message including the adjustment quantities Zforward and Zbackward from the adjustment quantity calculating part 70 and sends the message through the network 23 to the RTP communication part 44 of the sending device 21.

In step S50, if the adjustment quantity calculating part 70 determines, based on the necessary time Y calculated in step S46 and the allowable delay time Yth calculated in step S49, that expression (3) is not met, the process moves on to step S54.

In step S54, the adjustment quantity calculating part 70 calculates the adjustment quantity Zbackward (= Yth - Y) based on the necessary time Y and the allowable delay time Yth as shown in Fig. 10B. The adjustment quantity Zbackward will be an adjustment quantity for adjusting the capture timing Vblank such that expression (3) is met.

In step S55, the adjustment quantity calculating part 70 sets the adjustment quantity Zforward to zero and supplies the adjustment quantities Zforward and Zbackward to the RTP communication part 61. The process moves on to step S53, where the process in step S53 described above is performed. The adjustment quantity calculating process is thus completed.

As described above, according to the adjustment quantity calculating process, the adjustment quantities Zforward and Zbackward are calculated, according to, for example, the write information of the even-numbered field image $n_{even}$, so as to obtain the capture timing Vblank that allows expression (3) to be met.

Then, in the capture adjusting process, the capture timing Vblank is adjusted based on the adjustment quantities Zforward and Zbackward calculated through the adjustment quantity calculating process.

The receiving device 22, therefore, writes the image with expression (3) met, and hence can restrain a situation where a disturbance or the like is generated in the image because a part of the image is skipped.

In addition, for example, according to the adjustment quantity calculating process, even if expression (3) is met, the adjustment quantities Zforward and Zbackward for adjusting the capture timing Vblank are calculated so as to reduce the necessary time Y as much as possible to the extent that expression (3) is met.

Thus, the overall time taken from the write start time to the display timing is reduced for the odd-numbered field image $n_{odd}$ and the even-numbered field image $n_{even}$, enabling the image to be displayed with minimized low delay.

<2. Exemplary variations>

Note that, in step S22, if the adjustment quantity Zbackward = 0, the capture adjusting process allows the process to move on to step S23 to advance the capture timing Vblank by the adjustment quantity Zforward, but this is not limiting.

That is, for example, if the adjustment quantity Zbackward = 0, the capture timing Vblank may be left unadjusted because expression (3) is met. In this case, as shown in Fig. 7B, the even-numbered field image $n_{even}$ will be displayed in synchronization with the display timing Vblank ($n_{even}$).

In addition, the adjustment quantity calculating part 70 of the receiving device 22 calculates the adjustment quantities Zforward and Zbackward, but the adjustment quantity calculating part 70 may calculate just an adjustment quantity to be used for adjusting the capture timing. In this case, the RTP communication part 61 will not send an adjustment quantity that is set to zero but send just an adjustment quantity to be used for adjusting the capture timing.

The capture adjusting part 45 of the sending device 21 will then use the adjustment quantity obtained through the RTP communication part 44 and the network 23 from the RTP communication part 61 to adjust the capture timing.

Note that, in the present embodiment, the adjustment quantity calculating part 70 of the receiving device 22 calculates the adjustment quantities Zforward and Zbackward. Nonetheless, the sending device 21, for example, may be provided with the write information measuring part 68 through the adjustment quantity calculating part 70, so that the adjustment quantities Zforward and Zbackward are calculated at the sending device 21 side.

In this case, the capture adjusting part 45 adjusts the capture timing based on the adjustment quantities Zforward and Zbackward calculated by the adjustment quantity calculating part 70 at the sending device 21 side.

If the sending device 21 is provided with the write information measuring part 68 through the adjustment quantity calculating part 70, the write control part 64 of the receiving device 22 supplies the write start time Ts, the write end time Te, and the display timing Vblank for each unit of image data to the RTP communication part 61. The RTP communication part 61 will then supply the write start time Ts, the write end time Te, and the display timing Vblank from the write control part 64 through the network 23 to the write information measuring part 68 at the sending device 21 side.

Note that if the sending device 21 is provided with the write information measuring part 68 through the adjustment quantity calculating part 70, the receiving device 22 may not be provided with the write information measuring part 68 through the adjustment quantity calculating part 70.

In the present embodiment, the necessary time Y and the allowable delay time Yth are calculated based on the write information of the even-numbered field image $n_{even}$. The necessary time Y and the allowable delay time Yth may also be calculated based on, for example, the write information of the odd-numbered field image $n_{odd}$ as shown in Fig. 18. Alternatively, the necessary time Y and the allowable delay time Yth may be calculated based on, for example, the write information of the odd-numbered field image $n_{odd}$ and the write information of the even-numbered field image $n_{even}$.

In addition, for example, if the image is displayed with the progressive scheme, the display part 67 may use a progressive image (frame image) as each image and calculates the necessary time Y and the allowable delay time Yth based on the write information of the progressive image as shown in Fig. 19. The adjustment quantity Zforward (= Y - Yth) or the adjustment quantity Zbackward (= Yth - Y) then is calculated based on the necessary time Y and the allowable delay time Yth that have been calculated.

Furthermore, when generating the X distribution information representing the distribution of the write preparation time Xn as shown in Fig. 4, the adjustment quantity calculating part 70 generates the X distribution information with the frequency of the write preparation time Xn at 1 regardless of the timing of the measurement of the write preparation time Xn.

Nonetheless, the adjustment quantity calculating part 70 may generate the X distribution information with the frequency of the write preparation time Xn added more as the measurement timing is more recent. This is because, the more recently the write preparation time Xn is measured, the more accurately the write preparation time for the image to be received is likely represented.

This also applies to the generation of the P distribution information representing the distribution of the buffer write time Pn as shown in Fig. 5.

This allows the adjustment quantity calculating part 70 to generate the X distribution information more accurately representing the write preparation time for the image to be received and to generate the P distribution information more accurately representing the buffer write time for the image to be received.

The adjustment quantity calculating part 70 thus will be able to calculate the necessary time Y and the allowable delay time Yth for the image to be received more accurately based on such X distribution information and such P distribution information. Hence, the adjustment quantity calculating part 70 will be able to calculate a more accurate adjustment quantity based on the result of a comparison between the necessary time Y and the allowable delay time Yth (the result of the determination whether expression (3) is met). The capture adjusting part 45 of the sending device 21, therefore, will be able to adjust the capture timing Vblank more appropriately based on the adjustment quantity calculated by the adjustment quantity calculating part 70.

Note that this technique may take the following configurations.

(1) A sending device including an obtaining part that obtains an adjustment quantity for adjusting a capture timing to start capturing an image, a capture adjusting part that adjusts the capture timing according to the adjustment quantity, a capture part that captures the image in synchronization with the adjusted capture timing, and a sending part that sends the captured image to a receiving device.

(2) The sending device according to (1) above, wherein the receiving device includes a holding part that temporarily holds the image, writes into the holding part the image received from the sending part, and allows the image written in the holding part to be displayed in synchronization with a predetermined display timing, and the obtaining part obtains the adjustment quantity calculated based on a result of comparison between an allowable delay time representing a delay time allowed when the writing of the image into the holding part is not completed within a predetermined needed time from a write start time when the writing has started, and a necessary time at least taken from the write start time for the image that has been written with a delay time of the allowable delay time or less to the display timing.

(3) The sending device according to (2) above, further including a first calculating part that calculates the allowable delay time, a second calculating part that calculates the necessary time, a comparing part that compares the allowable delay time and the necessary time, and an adjustment quantity calculating part that calculates the adjustment quantity based on a comparison result of the comparing part, wherein the obtaining part obtains the adjustment quantity calculated by the adjustment quantity calculating part.

(4) The sending device according to (3) above, wherein, if a comparison result is obtained to show that the necessary time is longer than the allowable delay time, the adjustment quantity calculating part calculates the adjustment quantity for adjusting the capture timing such that the necessary time is reduced to an extent that a condition that the necessary time is longer than the allowable delay time is met.

(5) The sending device according to (3) or (4) above, wherein, if a comparison result is obtained to show that the necessary time is not longer than the allowable delay time, the adjustment quantity calculating part calculates the adjustment quantity for adjusting the capture timing such that the necessary time becomes longer than the allowable delay time.

(6) The sending device according to (2) above, wherein the obtaining part obtains the adjustment quantity by receiving the same from the receiving device.

(7) The sending device according to (3) above, further including a first measuring part that measures a write time taken to write the image into the holding part of the receiving device, wherein the first calculating part calculates the allowable delay time based on a distribution of the write time.

(8) The sending device according to (3) or (7) above, further including a second measuring part that measures a write preparation time taken to start writing the image into the holding part of the receiving device, wherein the second calculating part calculates the necessary time based on a distribution of the write preparation time.

Note that the series of processes described above may be executed by hardware or software. When the series of processes is executed by software, a program constituting the software is installed through a program recording medium into a computer integrated in special hardware, or, for example, into a general-purpose computer that can execute different functions with different programs installed.

[Exemplary configuration of computer]

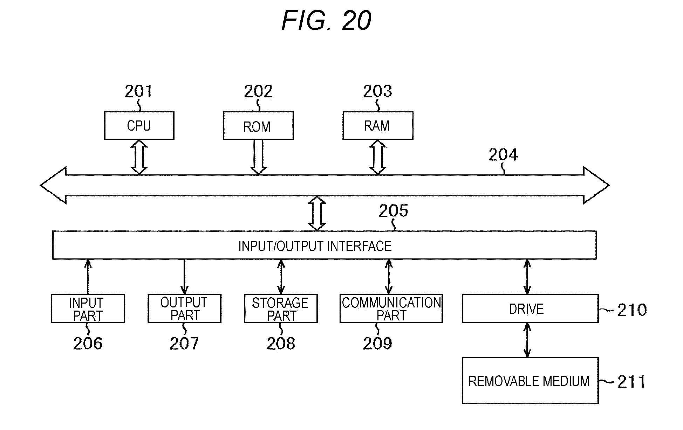

Fig. 20 is a block diagram of an exemplary configuration of hardware for a computer that executes, by a program, the series of processes described above.

A CPU (Central Processing Unit) 201 executes different processes according to the program stored in a ROM (Read Only Memory) 202 or a storage part 208. A RAM (Random Access Memory) 203 stores the program to be executed by the CPU 201 and data as appropriate. The CPU 201, the ROM 202, and the RAM 203 are mutually connected through

**EP 2 582 133 A1**

a bus 204.

The CPU 201 is also connected to an input/output interface 205 through the bus 204. The input/output interface 205 is connected to an input part 206 including a keyboard, a mouse, a microphone, and the like and to an output part 207 including a display, a speaker, and the like. The CPU 201 executes different processes corresponding to an instruction input from the input part 206. The CPU 201 then outputs a result of the processes to the output part 207.

The storage part 208 connected to the input/output interface 205 includes, for example, hardware, and stores the program to be executed by the CPU 201 and different types of data. The communication part 209 communicates with an external device through a network such as the Internet and a local area network.

Furthermore, the program may be obtained through the communication part 209 and stored in the storage part 208.

A drive 210 connected to the input/output interface 205 drives a removable medium 211 such as a magnetic disk, an optical disk, a magneto-optical disk, or a semiconductor memory when mounted and obtains the program, data, and the like stored therein. The obtained program and data are transferred to the storage part 208 as needed for storage.

A recording medium to record (store) the program that is to be installed in the computer and made executable by the computer includes, as shown in Fig. 20, the removable medium 211 that is a packaged medium including a magnetic disk (including a flexible disk), an optical disk (including a CD-ROM (Compact Disc-Read Only Memory) and a DVD (Digital Versatile Disc)), a magneto-optical disk (including an MD (Mini-Disc)), a semiconductor memory or the like, a ROM 202 storing the program temporarily or permanently, a hard disk constituting the storage part 208, or the like. The program is recorded into the recording medium through the communication part 209 that is an interface such as a router and a modem as needed by using a wired or wireless communication medium such as a local area network, the Internet, and digital satellite broadcasting.

Note that, in this specification, the steps describing the series of processes described above of course include processes to be performed in time sequence in the described order but may also include processes executed in parallel or individually even if not processed in time sequence.

In addition, in this specification, a system refers to equipment including multiple devices.

Note that the present embodiment described above should not be construed to limit embodiments in the present disclosure, and various modifications are possible without departing from the spirit of the present disclosure.

REFERENCE SIGNS LIST

21    Sending device
22    Receiving device
23    Network
41    Capture part
42    Encoding part
43    Packetizing part
44    RTP communication part
45    Capture adjusting part
46    Operation part
47    Control part
61    RTP communication part
62    Packet assembling part
63    Decoding part
64    Write control part
65    Buffer
66    Display control part
67    Display part
68    Write information measuring part
69    Write information storage part
70    Adjustment quantity calculating part
71    Operation part
72    Control part

**Claims**

1. A sending device comprising:

an obtaining part that obtains an adjustment quantity for adjusting a capture timing to start capturing an image;
a capture adjusting part that adjusts the capture timing according to the adjustment quantity;
a capture part that captures the image in synchronization with the adjusted capture timing; and
a sending part that sends the captured image to a receiving device.

2. The sending device according to claim 1, wherein
the receiving device comprises a holding part that temporarily holds the image,
writes into the holding part the image received from the sending part, and
allows the image written in the holding part to be displayed in synchronization with a predetermined display timing, and
the obtaining part obtains the adjustment quantity calculated based on a result of comparison between
an allowable delay time representing a delay time allowed when the writing of the image into the holding part is not completed within a predetermined needed time from a write start time when the writing has started, and
a necessary time at least taken from the write start time for the image that has been written with a delay time of the allowable delay time or less to the display timing.

3. The sending device according to claim 2, further comprising:

a first calculating part that calculates the allowable delay time;
a second calculating part that calculates the necessary time;
a comparing part that compares the allowable delay time and the necessary time; and
an adjustment quantity calculating part that calculates the adjustment quantity based on a comparison result of the comparing part,
wherein the obtaining part obtains the adjustment quantity calculated by the adjustment quantity calculating part.

4. The sending device according to claim 3, wherein,
in a case where a comparison result is obtained to show that the necessary time is longer than the allowable delay time, the adjustment quantity calculating part calculates the adjustment quantity for adjusting the capture timing such that the necessary time is reduced to an extent that a condition that the necessary time is longer than the allowable delay time is met.

5. The sending device according to claim 4, wherein,
in a case where a comparison result is obtained to show that the necessary time is not longer than the allowable delay time, the adjustment quantity calculating part calculates the adjustment quantity for adjusting the capture timing such that the necessary time becomes longer than the allowable delay time.

6. The sending device according to claim 2, wherein
the obtaining part obtains the adjustment quantity by receiving the same from the receiving device.

7. The sending device according to claim 3, further comprising
a first measuring part that measures a write time taken to write the image into the holding part of the receiving device,
wherein the first calculating part calculates the allowable delay time based on a distribution of the write time.

8. The sending device according to claim 3, further comprising
a second measuring part that measures a write preparation time taken to start writing the image into the holding part of the receiving device,
wherein the second calculating part calculates the necessary time based on a distribution of the write preparation time.

9. A sending method for a sending device that captures and sends an image, the sending method comprising the steps of, by the sending device:

obtaining an adjustment quantity for adjusting a capture timing to start capturing the image;
adjusting the capture timing based on the adjustment quantity;
capturing the image in synchronization with the adjusted capture timing; and
sending the captured image to a receiving device.

**10.** A program for allowing a computer to function as:

an obtaining part that obtains an adjustment quantity for adjusting a capture timing to start capturing an image;
a capture adjusting part that adjusts the capture timing based on the adjustment quantity;
a capture part that captures the image in synchronization with the adjusted capture timing; and
a sending control part that allows the captured image to be sent to a receiving device.

## FIG. 1

## FIG. 2

OutBuf0 (EVEN-NUMBERED FIELD)
OutBuf1 (ODD-NUMBERED FIELD)

## FIG. 3

## FIG. 4

FREQUENCY

$X_{th}$

# FIG. 5

# FIG. 6

# FIG. 7

## FIG. 8

A
SENDING SIDE
BEFORE
ADJUSTMENT

LINE NUMBER

$\text{Vblank}\ (n_{even})$ $\quad$ $\text{Vblank}\ (n+1_{odd})$ $\quad$ $\text{Vblank}\ (n+1_{even})$ $\quad$ $\text{Vblank}\ (n+2_{odd})$ $\quad$ $\text{Vblank}\ (n+2_{even})$

540

0

$Z_{forward}$

B
SENDING SIDE
AFTER
ADJUSTMENT

LINE NUMBER

$\text{Vblank}\ (n_{even})$ $\quad$ $\text{Vblank}\ (n+1_{odd})$ $\quad$ $\text{Vblank}\ (n+1_{even})$ $\quad$ $\text{Vblank}\ (n+2_{odd})$ $\quad$ $\text{Vblank}\ (n+2_{even})$

540

0

# FIG. 9

# FIG. 10

A

SENDING SIDE
(BEFORE ADJUSTMENT)

LINE NUMBER

Vblank
$(n_{even})$

Vblank
$(n+1_{even})$

540

0

t0

PROCESS
DELAY
INCLUDING
COMPRESSED
TRANSMISSION

t1          t2          t3          t4          TIME

B

RECEIVING SIDE

LINE NUMBER

Vblank
$(n-1_{even})$

Vblank
$(n_{even})$

$Y_{th}\left(=P_{th}-\dfrac{1}{60}\right)$

$Z_{backward}$

$P_{th}$

540

0

t0          t1          t2          $T_s$   $t3$          t4          TIME

Y

# FIG. 11

**A**
SENDING SIDE
BEFORE
ADJUSTMENT

LINE NUMBER

Vblank $(n_{even})$  Vblank $(n+1_{odd})$  Vblank $(n+1_{even})$  Vblank $(n+2_{odd})$  Vblank $(n+2_{even})$

540

0

$Z_{backward}$

**B**
SENDING SIDE
AFTER
ADJUSTMENT

LINE NUMBER

Vblank $(n_{even})$  Vblank $(n+1_{odd})$  Vblank $(n+1_{even})$  Vblank $(n+2_{odd})$  Vblank $(n+2_{even})$

540

0

## FIG. 12

A                                          SENDING SIDE
(AFTER ADJUSTMENT)

LINE NUMBER

Vblank $(n_{even})$        Vblank $(n+1_{even})$

540

0
t0            PROCESS DELAY INCLUDING COMPRESSED TRANSMISSION           $t4 - Z_{backward}$    TIME

$t3 - Z_{backward}$

$t1 - Z_{backward}$

$t2 - Z_{backward}$

B                                              RECEIVING SIDE

LINE NUMBER

Vblank $(n-1_{even})$        Vblank $(n_{even})$    $Y_{th}\left(= P_{th} - \dfrac{1}{60}\right)$

$P_{th}$

540

0
t0      t1      t2    $Y$      t4    TIME

$T_s'$      t3

$T_s$

$Z_{backward}$

# FIG. 13

t1 (START CAPTURING)　　　t2　　　t3 (START DISPLAYING)　　　t4

TIME

**1**　CAPTURING　ENCODING　PACKETIZING　TRANSFER　PACKET ASSEMBLING　DECODING

**2**　CAPTURING　ENCODING　PACKETIZING　TRANSFER　PACKET ASSEMBLING　DECODING

**3**　CAPTURING　ENCODING　PACKETIZING　TRANSFER　PACKET ASSEMBLING　DECODING

**n**　CAPTURING　ENCODING　PACKETIZING　TRANSFER　PACKET ASSEMBLING　DECODING

PACKET NUMBER

FIG. 14

# FIG. 15

```
        ( START SENDING PROCESS )
                    │
                    ▼
┌──────────────────────────────────────┐  S1
│      CAPTURE IN SYNCHRONIZATION        │
│         WITH CAPTURE TIMING            │
└──────────────────────────────────────┘
                    │
                    ▼
┌──────────────────────────────────────┐  S2
│       ENCODE CAPTURED IMAGE DATA        │
└──────────────────────────────────────┘
                    │
                    ▼
┌──────────────────────────────────────┐  S3
│ PACKETIZE ENCODED DATA OBTAINED THROUGH │
│   ENCODING INTO MULTIPLE RTP PACKETS    │
└──────────────────────────────────────┘
                    │
                    ▼
┌──────────────────────────────────────┐  S4
│        SEND MULTIPLE RTP PACKETS        │
└──────────────────────────────────────┘
                    │
                    ▼
   NO  ╱────────────────────────────╲  S5
  ◄────┤     RTCP MESSAGE RECEIVED?   ├
       ╲────────────────────────────╱
                    │ YES
                    ▼
       ┌────────────────────────┐  S6
       │    CAPTURE ADJUSTING    │
       │        PROCESS          │
       └────────────────────────┘
```

# FIG. 16

```
( START CAPTURE ADJUSTING PROCESS )
                    │
                    ▼
┌─────────────────────────────────────────┐ S21
│ OBTAIN Zforward AND Zbackward INCLUDED IN│
│         RECEIVED RTCP MESSAGE            │
└─────────────────────────────────────────┘
                    │
                    ▼                    S22
        ⟨      Zbackward = 0?      ⟩─────────┐
                    │             NO         │
                  YES                        │
                    ▼                        │
┌─────────────────────────────────────┐ S23  │
│  ADVANCE CAPTURE TIMING BY Zforward  │      │
└─────────────────────────────────────┘      │
                    │                         ▼
                    │   ┌──────────────────────────────────────┐ S24
                    │   │   DELAY CAPTURE TIMING BY Zbackward   │
                    │   └──────────────────────────────────────┘
                    │◄──────────────────────┘
                    ▼
              ( RETURN )
```

## FIG. 17

START ADJUSTMENT QUANTITY CALCULATING PROCESS

MEASURE AND STORE X OF EACH FIELD — S41

MEASURE AND STORE P OF EACH FIELD — S42

PREDETERMINED TIME ELAPSED? — S43 — NO

YES

CALCULATE DISTRIBUTION OF WRITE PREPARATION TIME X — S44

CALCULATE THRESHOLD Xth ACCORDING TO DISTRIBUTION OF WRITE PREPARATION TIME X — S45

CALCULATE NECESSARY TIME Y ACCORDING TO THRESHOLD Xth AND DISPLAY INTERVAL Vblank Interval — S46

CALCULATE DISTRIBUTION OF BUFFER WRITE TIME P — S47

CALCULATE THRESHOLD Pth ACCORDING TO DISTRIBUTION OF BUFFER WRITE TIME P — S48

CALCULATE ALLOWABLE DELAY TIME Yth ACCORDING TO THRESHOLD Pth AND EXPECTED WRITE TIME 1/60 — S49

Y > Yth? — S50 — NO

YES

CALCULATE Zforward ACCORDING TO NECESSARY TIME Y AND ALLOWABLE DELAY TIME Yth — S51

SET Zbackward TO 0 — S52

CALCULATE Zbackward ACCORDING TO NECESSARY TIME Y AND ALLOWABLE DELAY TIME Yth — S54

SET Zforward TO 0 — S55

SEND Zforward AND Zbackward INCLUDED IN RTCP MESSAGE — S53

END

FIG. 18

FIG. 19

## FIG. 20

```
      201           202           203
      CPU           ROM           RAM
                                                        204

            INPUT/OUTPUT INTERFACE          205

   INPUT      OUTPUT    STORAGE   COMMUNICATION    DRIVE        210
   PART       PART      PART      PART

   206        207       208       209

                                          REMOVABLE MEDIUM     211
```

<table>
<tr><td colspan="2"><strong>INTERNATIONAL SEARCH REPORT</strong></td><td>International application No.<br><br>PCT/JP2012/064535</td></tr>
</table>

| | |
|---|---|
| A. CLASSIFICATION OF SUBJECT MATTER<br>*H04N7/173*(2011.01)i, *A61B19/00*(2006.01)i, *H04N7/26*(2006.01)i<br><br><br>According to International Patent Classification (IPC) or to both national classification and IPC | |

**B. FIELDS SEARCHED**

Minimum documentation searched (classification system followed by classification symbols)
H04N7/173, A61B19/00, H04N7/26

Documentation searched other than minimum documentation to the extent that such documents are included in the fields searched
Jitsuyo Shinan Koho 1922-1996 Jitsuyo Shinan Toroku Koho 1996-2012
Kokai Jitsuyo Shinan Koho 1971-2012 Toroku Jitsuyo Shinan Koho 1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 11-215480 A (Canon Inc.),<br>06 August 1999 (06.08.1999),<br>paragraphs [0001] to [0007], [0012] to [0017],<br>[0028] to [0039]<br>& US 2003/0037158 A1 | 1,9,10<br>2-8 |
| X<br>A | JP 2007-82045 A (TOA Corp.),<br>29 March 2007 (29.03.2007),<br>paragraphs [0002], [0181] to [0182]<br>(Family: none) | 1,9,10<br>2-8 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>26 June, 2012 (26.06.12) | Date of mailing of the international search report<br>10 July, 2012 (10.07.12) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007311924 A